# EUROPEAN PATENT SPECIFICATION

(11) **EP 0 643 113 B1**
(45) Date of publication and mention of the grant of the patent: **28.11.2001**
(21) Application number: 93114466.1
(22) Date of filing: 09.09.1993
(51) Int. Cl.: C09D 11/00

(54) **Aqueous ink compositions containing anti-curl agents**
Wässrige Tintenzusammensetzung, die Mittel gegen das Einrollen von Papier enthält
Composition aqueuse d'encre contenant des agents contre l'enroulement de papier

(43) Date of publication of application: 15.03.1995
(73) Proprietor: E.I. DU PONT DE NEMOURS AND COMPANY, Wilmington Delaware 19898 (US)
(72) Inventor: Hickman, Mark Stephen, Vancouver, Washington 98684 (US); Stoffel, John, San Diego, CA 92128-2318 (US); Johnson, Loren Eugene, Corvallis, Oregon 97330 (US); Askeland, Ronald A., San Diego, California 92129 (US); Hunt, Catherine Balassu, San Diego, California 92129 (US); Matrick, Howard, Highlands, New Jersey 07732 (US); Prasad, Keshava Anand, San Diego, California 92127 (US); Rich, John Thurman, San Diego, California 92128 (US); Slevin, Leonard, San Diego, California 92128 (US)
(74) Representative: Kuhnen & Wacker

(56) References cited:
- EP-A- 0 392 876
- EP-A- 0 539 004
- US-A- 5 100 469
- US-A- 5 118 350
- US-A- 5 180 425
- DATABASE WPI Week 8216, Derwent Publications Ltd., London, GB; AN 82-31775E & JP-A-57 042 777 (SAKURA CRAPAS) 10 March 1982
- DATABASE WPI Week 8220, Derwent Publications Ltd., London, GB; AN 82-39945E & JP-A-57 057 762 (FUJI PHOTO FILM) 7 April 1982

## Description

### FIELD OF THE INVENTION

This invention relates to aqueous pigmented ink jet ink compositions which eliminate curl in printed plain-paper elements.

### BACKGROUND OF THE INVENTION

Ink jet printing is a non-impact method that produces droplets of ink that are deposited on a substrate such as paper or transparent film in response to an electronic digital signal. Thermal or bubble jet drop-on-demand ink jet printers have found broad application as output for personal computers in the office and the home.

Aqueous inks used in ink jet printing have water as a major component. Water has the advantage of being non-toxic, non-combustible and environmentally sound relative to non-aqueous inks which are largely composed of organic solvents. Water is also an excellent media for dispersed pigments or dissolved dyes.

The use of water in large concentrations, however, also has several disadvantages. Water has a slow evaporation rate relative to low-boiling organic solvents, which reduces the rate of drying and, thus, the rate of printing. Water also interacts with paper to cause two major distortions known as paper cockle and paper curl. Paper cockle is a distortion in which bumps, indentations and other irregularities are randomly produced on the printed paper, giving the paper a "wrinkled" appearance. Curl is a phenomena in which the edges of the paper migrate towards the center of the paper. The direction of curl may be on the printed side of the paper, or it may be on the non-printed side (the latter being known as "reverse curl").

Curl may appear immediately after printing or may take a day or two to manifest. In its final state, the paper sheet may take the form of a tube. Curled paper cannot be stacked, sheet upon sheet, thereby causing much inconvenience to the user. Curled sheets are difficult to display or store and cannot be used in processes requiring near planarity, such as media feeding, tracking, and print alignment. Curl is most prevalent in solid fill printing and is therefore a more acute problem in graphics as opposed to text printing. For the same reason, it is mostly a concern in 4 color printing where graphics are prominent. The use of heating elements (commonly employed to increase the rate of drying of aqueous inks) are known to accelerate paper curl.

Various mechanical devices to reduce curl such as heated rollers and tension applicators have been tried. These devices are only marginally effective and add considerably to the cost and size of the printer. (Heated rollers used to reduce curl differ from the heaters used to increase drying rate; in the former heat is applied to both sides of the paper after printing whereas in the latter heat is applied during the printing process.)

It is also known to reduce curl by modifying the print media. This approach is highly undesirable, however, because it is expensive and because consumers have an overwhelming preference for printers which can use a wide variety of office papers, especially those sold into the electrophotographic copier paper market, or so-called "plain-paper" printers.

There is thus a need in the art for aqueous ink compositions which can be printed in full page graphics without producing paper curl, thus eliminating the need for expensive, ineffective and cumbersome mechanical devices or special print media.

The ink compositions of the present invention fulfil the above need without any deleterious effects such as inducing pluggage, kogation, inferior print quality, or instability in storage, and at much lower cost than can be obtained by equipment or media modifications.

### SUMMARY OF THE INVENTION

In one aspect, this invention provides an aqueous pigmented ink jet ink composition comprising an aqueous carrier medium, a colorant being a pigment dispersion and at least one anti-curl agent in an amount of at least 10 % by weight, based on the total weight of the ink composition, wherein the anti-curl agent has a solubility in water of at least 4.5 % (4.5 grams per 100 grams of water) at 25 °C and is selected from:
**(a)** 1,3-diols; 1,3,5-triols; amino-1,3-diols; and polyoxyalkylene derivatives thereof having the following structure: 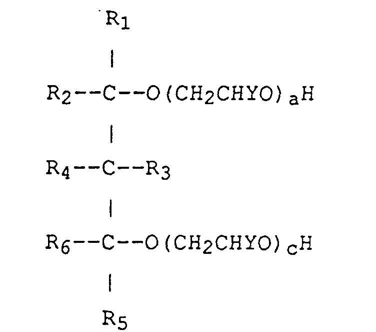 wherein
   R₁, R₂, R₄, R₅ and R₆ are independently H; CₙH₂ₙ₊₁, where n = 1-4; or CₙH₂ₙO(CH₂CHYO)_{b}H where n = 1-6 and b = 0-25;
   R₃ = H; CₙH₂ₙ₊₁ where n = 1-4; CₙH₂ₙO(CH₂CHYO)_{b}H where n = 1-6 and b = 0-25; or (CH₂)ₑNXZ, where X and Z are independently H, CH₃, C₂H₅ or C₂H₄O(CH₂CHYO)_{d}H, where d = 0-25 and e = 0-3;
   Y = H or CH₃;
   a and c are independently 0-25; and
   wherein the total number of CH₂CHYO units is 0-100;
   provided that if said compound is represented by the formula 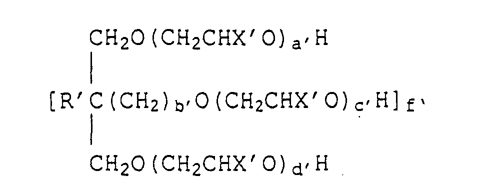
   wherein X' = -H oder -CH₃;
   R' = -H, -CH₃, -C₂H₅, -C₃H₇, -C₄H₉ oder -CH₂O(CH₂CH₂O)ₑ,H;
   b' = 0 or 1;
   a'+d'+f'(c'+e') = 2-100; and
   f' = 1-6,
   it is not present in an amount of 70 Gew.-% or below of the pigmented ink jet ink composition
**(b)** compounds having the following structure: 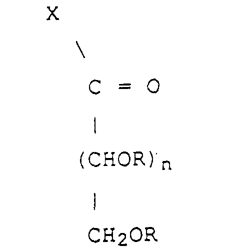 wherein
   X = H; OH; CH₂O(CH₂CHYO)ₐH, where a = 0-25; O(CH₂CHYO)_{b}H, where b = 0-25; or OM where M is a metal cation;
   n = 2-7;
   R = (CH₂CHYO)_{c}H, where Y = H or CH₃ and c = 0-25; and
   wherein the total number of CH₂CHYO units is 0-125;
**(c)** pyranosides and polyalkoxyalkylene derivatives thereof having the following structure: 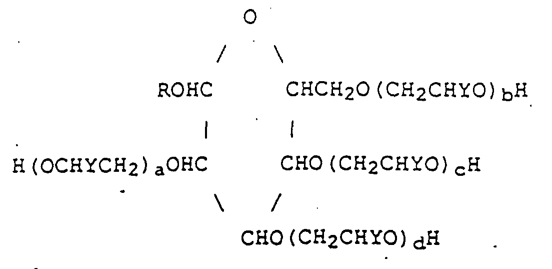 wherein
   R = H or CₙH₂₊₁, where n = 0-4;
   a, b, c and d are independently 0-30;
   Y = H or CH₃; and
   wherein the total number of CH₂CHYO units is 0-120;
**(d)** poly(oxyalkylene) compounds having the following structure:

   H-(OCH₂CHY)ₓOH

   wherein
   Y = H or CH₃, and
   x = 3-20;
   and
**(e)** polyoxyalkylene derivatives of aliphatic polyamines having the structure:

   Z₁Z₂N(CH₂CH₂NZ₃)ₙZ₄

   wherein
   Z₁ = (CH₂CHYO)ₐH;
   Z₂ = (CH₂CHYO)_{b}H;
   Z₃ = (CH₂CHYO)_{c}H;
   Z₄ = (CH₂CHYO)_{d}H;
   where Y = H or CH₃;
   a, b, c, and d are independently 0-20;
   n = 1-20; and
   wherein the total number of CH₂CHYO units is 3-200.

In another aspect, the invention comprises a process for reducing paper curl in plain-paper printed elements, consisting essentially of the step of applying a pigmented ink jet ink composition to a plain-paper substrate with an ink jet printer, wherein said pigmented ink jet ink composition is as defined above.

In addition to the benefit of eliminating curl, the inks of this invention have surprisingly been found to be advantageous in more specific applications. For example, as explained more fully below, it has been found that "puddling" can be controlled in certain inks using the anti-curl agents herein described. "Puddling" refers to the spreading of ink from pen nozzles onto the cover plate, which can cause defects in printing.

Moreover, those skilled in the art will recognize that a number of the compounds recited above are known additives for ink jet inks for other purposes. For example, US Patent 5,100,469 teaches that the rate of drying of printed ink jet inks can be improved by adding 0.1 to about 8% by weight of meso-erythritol, trimethylol alkyl compounds, trimethylol alkylamines, or salts thereof. Similarly, Japanese Unexaminec Patent Applications (Kokai) Nos. 2-14262 and 2-14260 teach fast drying dye-based ink jet inks having 0.5 to 25% by weight of trimethylolethane or trimethylolpropare, respectively, in combination with 1.0 to 10% by weight of a lower alcohol.

Many such compounds are also known humectarts. Typically, however, these compounds have been used in concentrations too low to obtain the anti-curl advantages taught herein. Nevertheless, it has been found that these compounds, when used in sufficient concentration to produce the anti-curl effect, remain effective humectants.

### DETAILED DESCRIPTION OF THE INVENTION

The aqueous pigmented ink jet inks of this invention are particularly suited for use in thermal ink jet printers.

The inks may be adapted to the requirements of a particular ink jet printer to provide a balance of light stability, smear resistance, viscosity, surface tension, optical density, low toxicity, high material compatibility and drying rate as is well known in the art.

### AQUEOUS CARRIER MEDIUM

The aqueous carrier medium is water or a mixture of water and at least one water soluble organic solvent other than the anti-curl agents. Deionized water is commonly used.

Water-soluble organic solvents are well known, representative examples of which are disclosed in US Patent 5,085,698.

Selection of a suitable mixture of water and water soluble organic solvent depends upon requirements of the specific application, such as desired surface tension and viscosity, the selected colorant, drying time of the ink, and the media substrate onto which the ink will be printed. A mixture of a water soluble organic solvent having at least two hydroxyl groups (e.g, diethylene glycol) and deionized water is preferred as the aqueous carrier medium.

In the event that a mixture of water and organic solvent is used as the aqueous carrier medium, water would comprise between 30% and 95%, preferably 60% to 95%, by weight of the aqueous medium, based on the total weight of the aqueous carrier medium including the weight of the anti-curl agents.

The amount of aqueous carrier medium (including the weight of the anti-curl agents) is in the range of 70 to 99.8%, preferably 84 to 99.8%, based on total weight of the ink when an organic pigment is selected, 25 to 99.8%, preferably approximately 70 to 99.8% when an inorganic pigment is selected and 80 to 99.8% when a dye is selected.

### COLORANTS

The colorants useful in the present invention are pigment dispersions. The term "pigment" means a colorant that is applied in an insoluble particulate state.

The term "pigment dispersion", as is known in the art and as used herein, refers to a mixture of a pigment and a dispersing agent. Preferably, the dispersing agent is a polymeric dispersant.

Useful pigments for the dispersion comprise a wide variety of organic and inorganic pigments, alone or in combination. the aqueous carrier medium may also be mentioned here.

The pigment particles should be sufficiently small to permit free flow of the ink through the ink jet printing device, especially at the ejecting nozzles that usually have a diameter ranging from 10 to 50 µm. Particle size also has an influence on the stability of the pigment dispersion. Brownian motion of minute particles will help prevent the particles from settling. Small particle size is also desirable for maximum color strength. The range of useful particle size is 0.005 µm to 15 µm. Preferably, the pigment particle size should range from 0.005 to 5 µm and most preferably, from 0.01 to 0.5 µm.

The selected pigment may be used in dry or wet form. For example, pigments are usually manufactured in aqueous media and the resulting pigment is obtained is water wet presscake. In presscake form, the pigment is not aggregated to the extent that it is in dry form. Thus, pigments in water wet presscake form do not require as much deaggregation in the process of preparing the inks from dry pigments. Representative commercial dry and presscake pigments that may be used in practicing the invention are disclosed in the aforementioned US Patent 5,085,698.

Fine particles of metal or metal oxides also may be used to practice the invention. For example, metal and metal oxides are suitable for the preparation of magnetic ink jet inks. Fine particle size oxides, such as silica, alumina and titania, also may be selected. Furthermore, finely divided metal particles, such as copper, iron, steel, aluminum and alloys, may be selected for appropriate applications.

In the case of organic pigments, the ink may contain up to 30% pigment by weight, but will generally be in the range of 0.1 to 15%, preferably 0.1 to 8%, by weight of the total ink composition for most thermal ink jet printing applications. If an inorganic pigment is selected, the ink will tend to contain higher weighs percentages of pigment than with comparable inks employing organic pigment, and may be as high as 75% in some cases, because inorganic pigments generally have higher specific gravities than organic pigments.

Polymeric dispersants are the preferred dispersants for pigments. Polymeric dispersants suitable for practicing the invention include AB, BAB or ABC block copolymers. Most preferred are polymeric dispersants made by the group transfer polymerization process because these are free from higher molecular weight species that tend to plug pen nozzles.

Suitable AB or BAB block copolymers and the synthesis thereof are disclosed in the aforementioned US Patent 5,085,698. Suitable ABC triblock copolymers and their synthesis are disclosed in US Patents 5,519,085 and 5,219,945.

Although random copolymers can be used as dispersing agents, they are not as effective in stabilizing pigment dispersions as the block polymers, and therefore are not preferred.

The polymeric dispersant is generally present in the range of 0.1 to 30% by weight of the total ink composition, preferably in the range of 0.1% to 8% by weight of the total ink composition. Dispersion stability of the pigment particles is adversely affected if insufficient polymeric dispersant is present.

In addition to, or in place of the preferred polymeric dispersant compounds, surfactant compounds may be used as dispersants. These may be anionic, cationic, nonionic, or amphoteric surfactants. A detailed list of non-polymeric as well as some polymeric dispersants is provided in the section on dispersants, pages 110-129, 1990 McCutcheon's Functional Materials, North American Edition, Manufacturing Confection Publishing Co., Glen Rock, NJ, 07452.

### ANTI-CURL AGENTS

The anti-curl agents suitable for use in the present invention contain polyhydroxy groups and/or polyoxyalkylene groups derived by reaction of the polyhydroxy groups with alkylene oxides. The compounds have a solubility in water of at least 4.5% (4.5 parts anti-curl agent in 100 parts of water) at 25° C and are represented by the classes of compounds discussed below.
(a) 1,3-diols, 1,3,5-triols, amino-1,3-diols or their polyoxyalkylene derivatives having the structure recited above comprise the first class of anti-curl agents suitable for use in the present invention. Examples of anti-curl agents within this class include: 2,2-dimethyl-1,3-propanediol, 2-methyl-2-ethyl-1,3-propanediol, 2,2-diethyl-1,3-propanediol, 2-methyl-2-propyl-1,3-propanediol, 1,2,4-butanetriol, 3-methyl-1,3,5-pentanetriol, 1,3,5-pentanetriol, 2,4-pentanediol, 2-methyl-2,4-pentanediol, 1,1,1-tris(hydroxymethyl) aminomethane, 2,2-bis(hydroxymethyl)- 2,2',2''-nitrilotriethanol, 2-amino-2-methyl-1,3-propanediol and 2-amino-2-ethyl-1,3-propanediol.
   The amino compounds may be neutralized fully or partially with mineral acids such as hydrochloric acid. The polyoxyalkylene compounds are derived from the above mentioned list of compounds.
**(b)** Aldose, ketose, aldonic acid, soluble metal aldonate salt, and polyalkoxyalkylene derivatives thereof comprise the anti-curl agents in class(b). Examples of these compounds are D- and L- forms of erythrose, threose, arabinose, ribose, lyxose, xylose glucose, mannose, altrose, allose, talose, galactose, idose, gulose and the corresponding aldonic acids of the above. Examples of the latter are D-gluconic acid, D-mannonic acid, D-altronic acid and D-allonic acid. Example of a soluble metal aldonate salt is potassium gluconate.
**(c)** Pyranosides and their polyalkoxyalkylene derivatives comprise the next class of anti-curl agents for use in the present invention, examples of which include methyl alpha-D-glucoside and methyl beta-D-alloside. Polyoxyalkylene derivatives include the Glucam® products available from Amerchol, Edison NJ.
**(d)** Anti-curl agents within class (d) are poly(alkoxyethylene) compounds having the structure recited above. Representative compounds within this class include triethylene glycol, tetraethylene glycol, pentaethylene glycol, hexaethylene glycol, octaethylene glycol, polyethylene glycol 200, polyethylene glycol 400 and polyethylene glycol 1000. Diethylene glycol is not an effective anti-curl agent. Higher molecular weight compounds impart excessive viscosity to the inks, can cause flocculation of the pigment dispersion, and are less effective anti-curl agents. Therefore, such compounds are not preferred.
**(e)** The final class of anti-curl agents comprises polyoxyalkylene derivatives of an aliphatic polyamires, such as polyoxyalkylene derivatives of ethylene diamine, diethylenetriamine, and triethylenetetramine.

The amine groups may be neutralized fully or partially with mineral acids, such as hydrochloric acid.

Mixtures of compounds, both within and among the classes mentioned are also useful in this invention. Especially preferred are mixtures of one compound from class (a) with one compound from class (d), where one of the selected compounds is present in an amount of 10-90%, preferably 25-75%, based on the total weight of the anti-curl mixture.

The polyoxyalkylene derivatives of the compounds in classes (a) through (e) are prepared either from ethylene or propylene oxide or combinations of both oxides, although ethylene oxide or mixtures of ethylene oxide and propylene oxide are preferred. Reaction with a single alkylene oxide can produce mixtures of compounds with varying degree of oxyalkylation on each hydroxyl group. Accordingly, the structures recited are based on average compositions which may contain a range of oxyalkylene units. Random and block copolymer chains of propylene and ethylene oxides may be employed. For example, a polyhydroxy compound may be reacted first with propylene oxide then in sequence terminated with ethylene oxide.

In many cases the various hydroxyl groups or their alkoxide salts are in non-equivalent positions. Therefore they may react with the alkylene oxide at different rates depending upon steric factors and nucleophilicity. Thus various hydroxyl groups in the same compound may have differing degrees of polymerization.

To be effective at substantially eliminating paper curl, the anti-curl agents must be present in an amount of at least 10% by weight, based on the total weight of the ink composition. Acceptable ranges for the anti-curl agents are 10-75%, preferably 12-55%, and most preferably 15-30% based on the total weight of ink.

### OTHER INGREDIENTS

The ink may contain other ingredients. For example, the surfactants mentioned above may be used to alter surface tension as well as maximize penetration. However, because surfactants may destabilize pigment dispersions, care should be taken to insure compatibility of the surfactant with the other ink components. In aqueous inks, the surfactants may be present in the amount of 0.01-5% and preferably 0.2-3%, based on the total weight of the ink.

Biocides may be used in the ink compositions to inhibit growth of microorganisms. Dowicides® (Dow Chemical, Midland, MI), Nuosept® (Huls America, Inc., Piscataway, NJ), Omidines® (Olin Corp., Cheshire, CT), Nopcocides® (Henkel Corp., Ambler, PA), Troysans® (Troy Chemical Corp., Newark, NJ) and sodium benzoate are examples of such biocides.

In addition, sequestering agents such as EDTA nay also be included to eliminate deleterious effects of heavy metal impurities. Other known additives, such as viscosity modifiers and other acrylic or non-acrylic polymers may also be added to improve various properties of the ink compositions. As noted above, many of the anti-curl agents of this invention are effective humectants for many ink jet ink formulations.

### INK PREPARATION

The ink compositions of the present invention are prepared in the same manner as other ink jet ink compositions.

The dispersion is prepared by premixing the selected pigment(s) and dispersant in water. The dispersion step may be accomplished in a horizontal mini mill, a ball mill, an attritor, or by passing the mixture through a plurality of nozzles within a liquid jet interaction chamber at a liquid pressure of at least 68.9 bar (1000 psi) to produce a uniform dispersion of the pigment particles in the aqueous carrier medium, as described in US Patent 5,026,427. Other cosolvents that may improve penetration or decap properties may be present during the dispersion step.

It is generally desirable to make the ink jet inks in concentrated form, which is subsequently diluted with a suitable liquid to the appropriate concentration for use in the ink jet printing system. By dilution the ink is adjusted to the desired viscosity, color, hue, saturation density, and print area coverage for the particular application.

### INK PROPERTIES

Jet velocity, separation length of the droplets, drop size, and stream stability are greatly affected by the surface tension and the viscosity of the ink. Ink jet inks suitable for use with ink jet printing systems should have a surface tension in the range of 0.18 to 0.70 mN/cm (18 to 70 dyne/cm) and, more preferably, in the range of 0.20 to 0.50 mN/cm (20 to 50 dyne/cm) at 20 °C. Acceptable viscosities are not greater than 20 mP·s (cP), and preferably in the range of 1.0 to 10.0 mPa·s (cP) at 20 °C with appropriate rheology for both image setting and thermal ink jet firing refill frequencies.

The ink has physical properties compatible with a wide range of ejecting conditions, i.e., driving voltage and pulse width for thermal ink jet printing devices, driving frequency of the piezo element for either a drop-on-demand device or a continuous device, and the shape and size of the nozzle. They may be used with a variety of ink jet printers such as continuous, piezoelectric drop-on-demand and thermal or bubble jet drop-on-demand, and are particularly adapted for use in thermal ink jet printers. The inks have excellent storage stability for a long period and do not clog in an ink jet apparatus.

Although particularly advantageous for use in printing plain-paper elements, the inks of this invention are also suitable for use with a variety of print media, such as fabrics and transparencies. The printed ink images have clear color tones and high density. The inks are compatible with the component parts of ink jet printing devices and they are essentially odorless.

### EXAMPLES

The invention will now be further illustrated by the following examples, in which parts and percentages are by weight unless otherwise noted. All ingredients used in the ink formulations were obtained from Aldrich Chemical, Milwaukee, WI, unless otherwise indicated.

### PROCEDURE A: Butyl methacrylate//methacrylic acid (BMA//MAA 10//10) AB block polymer (M.W. 2400).

A 12-liter flask was equipped with a mechanical stirrer, thermometer, N₂ inlet, drying tube outlet, and addition funnels. Tetrahydrofuran ("THF"), 3750 g, and p-xylene, 7.4 g, were charged to the flask. A tetrabutyl ammonium m-chlorobenzoate catalyst (3.0 ml of a 1.0 M solution in acetonitrile) was then added. Initiator, 1,1- bis(trimethylsiloxy)-2-methyl propene, 291.1 g (1.25 M) was injected. Feed I [tetrabutyl ammonium m-chlorobenzoate, 3.0 ml of 1.0 M solution in acetonitrile] was started at zero minutes and added over 150 minutes. Feed II [trimethylsilyl methacrylate, 1976 g (12.5 M)] was started at zero minutes and added over 35 minutes. One hundred and eighty minutes after Feed II was completed (over 99% of the monomers had reacted) Feed III [butyl methacrylate, 1772 g (12.5 M)] was started and added over 30 minutes.

At 400 minutes, 780 g of dry methanol were added to the above solution and distillation begun. During the first stage of distillation, 1300.0 g of material with a boiling point of below 55°C were removed from the flask. The theoretical amount of methoxytrimethylsilane (BP = 54°C) to be removed was 1144.0 g. Distillation continued during the second stage while the boiling point increased to 76°C. During the second stage of distillation, 5100 g of i-propanol was added. A total of 8007 g of solvent were removed.

This procedure resulted in 52.5% BMA//MMA AB block polymer solution in THF and i-propranol, which was used to prepare the pigment concentrate as described below.

### Examples 1-5

The pigment-based inks were prepared from a dispersion concentrate that contained 46.1 g of diethylene glycol, 632 g of deionized water, 150 g of FW18 carbon black pigment (DeGussa Corp , Allendale, NJ) and 142.9 g of the 52.5% polymer solution from Procedure A, neutralized with 29.0 g of 45.6% KOH.

To this disperion all of the ink components, or aqueous stock solutions thereof and the required amount of water was added with stirring so that the total weight of the ink was 100 grams.

The inks were tested by loading them in thermal ink jet pens having a resistor size of 42-50 *µ*m and an orifice of 30-40 µm. The pens were placed in an ink jet printer which employs heat to decrease the length of time needed to dry the print. No mechanical curl reduction devices were employed.

A full page of double density blackout having 6.35 mm (quarter inch) margins was printed using a variety of plain-papers (identified below) in order to simulate a worse case situation. The printed paper was placed face up on a flat surface and the amount of curl was determined by measuring the distance between the edge of the paper and the flat surface at intervals of 1 hour, 24 hours, 48 hours, 72 hours and 96 hours. The acceptable amount of curl was defined as being less than 40 mm, based upon esthetics, readability and ease of handling.

### Example 1 - Control

- 18.7 grams: Diethylene glycol
- 26.7 grams: Pigment dispersion concentrate
- 55.8 grams: Deionized water

### Example 2

- 17.5 grams: 2-ethyl-2-(hydroxymethyl)-1,3-propanediol
- 26.7 grams: Pigment dispersion concentrate
- 55.8 grams: Deionized water

### Example 3

- 17.5 grams: alpha-D-Glucose
- 26.7 grams: Pigment dispersion concentrate
- 55.8 grams: Deionized water

### Example 4

- 17.5 grams: Methyl-alpha-D-glucoside
- 26.7 grams: Pigment dispersion concentrate
- 55.8 grams: Deionized water

### Example 5

- 17.5 grams: D-Gluconic acid, Potassium salt
- 26.7 grams: Pigment dispersion concentrate
- 55.8 grams: Deionized water

**TABLE 1**

| Example | Temp/RH³ | Paper | 1h | 24 h | 48 h |
|---|---|---|---|---|---|
| 1 (Control) | Ambient | GB¹ | 3 | 66 | tube |
| | | SH² | 3 | tube | tube |
| 2 | Ambient | GB | 16 | 6 | 5 |
| | | SH | 13 | 6 | 6 |
| 3 | Ambient | GB | 11 | 7 | 5 |
| | | SH | 26 | 14 | 10 |
| 4 | Ambient | GB | 19 | 30 | 31 |
| | | SH | 20 | 32 | 35 |
| 5 | Ambient | GB | 24 | 18 | 14 |
| | | SH | 24 | 16 | 13 |

| | | | | | |
|---|---|---|---|---|---|
| 1. GB = Gilbert® bond paper (25% cotton); Style 1057 (Mead Company, Dayton, Ohio) | | | | | |
| 2. SH = Springhill Relay DP (International Paper, Tuxedo, NY) | | | | | |
| 3. Conditions for printing and storage. | | | | | |

## Claims

1. An aqueous pigmented ink jet ink composition comprising:
(1) an aqueous carrier medium;
(2) a colorant being a pigment dispersion comprising a pigment and a polymeric dispersant; and
(3) at least one anti-curl agent in an amount of at least 10 % by weight, based on the total weight of the pigmented ink jet ink composition, wherein the anti-curl agent has a solubility in water of at least 4.5 % at 25 °C and is selected
from: (a) 1,3-diols, 1,3,5-triols, amino-1,3-diols and polyoxyalkylene derivatives thereof having the following structure: 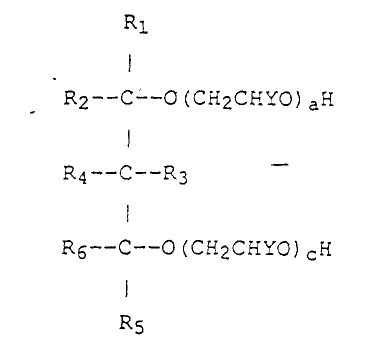 wherein
R₁, R₂, R₄, R₅ and R₆ are independently H; CₙH₂ₙ₊₁, where n = 1-4; or CₙH₂ₙO(CH₂CHYO)_{b}H where n = 1-6 and b = 0-25;
R₃ = H; CₙH₂ₙ₊₁ where n = 1-4; CₙH₂ₙO(CH₂CHYO)_{b}H where n = 1-6 and b = 0-25; or (CH₂)ₑNXZ, where X and Z are independently H, CH₃, C₂H₅ or C₂H₄O(CH₂CHYO)_{d}H, where d = 0-25 and e = 0-3;
Y = H or CH₃;
a and c are independently 0-25; and
wherein the total number of CH₂CHYO units is 0-100;
provided that if said compound is represented by the formula 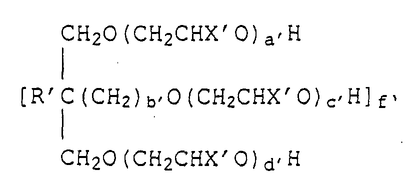 wherein
X' = -H oder -CH₃;
R' = -H, -CH₃, -C₂H₅, -C₃H₇, -C₄H₉ oder -CH₂O(CH₂CH₂O)ₑ,H;
b' = 0 or 1;
a'+d'+f'(c'+e') = 2-100; and
f' = 1-6,
it is not present in an amount of 70 Gew.-% or below of the pigmented ink jet ink composition
(b)compounds having the following structure: 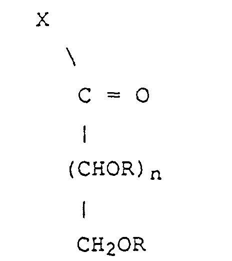 wherein
X = H; OH; CH₂O(CH₂CHYO)ₐH; O(CH₂CHYO)_{b}H; or OM where M is a metal cation;
n = 2-7;
R = (CH₂CHYO)_{c}, where Y = H or CH₃;
a, b and c are independently 0-25; and
wherein the total number of CH₂CHYO units is C-125;
(c) pyranosides and polyalkoxyalkylene derivatives thereof having the following structure: 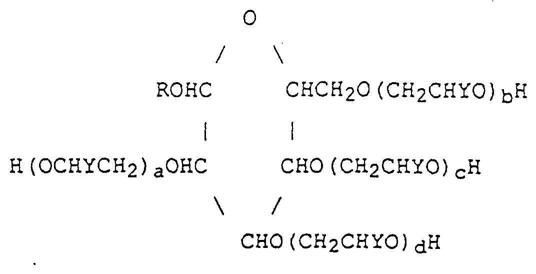 wherein
R = H or CₙH₂₊₁, where n = 0-4;
a, b, c and d are independently 0-30;
Y = H or CH₃; and
wherein the total number of CH₂CHYO units is 0-120;
(d) poly(oxyalkylene) compounds having the following structure:
H-(OCH₂CHY)ₓOH
wherein
Y = H or CH₃, and
x = 3-20; and
(e) polyoxyalkylene derivatives of aliphatic polyamines having the structure:
Z₁Z₂N(CH₂CH₂NZ₃)ₙZ₄
wherein Z₁, Z₂, Z₃, or Z₄ are independently (CH₂CHYO)ₐH where
Y = H or CH₃;
n = 1-20;
a is independently 0-20; and
wherein the total number of CH₂CHYO units is 3-200.

2. The pigmented ink jet ink composition of claim 1, wherein the anti-curl agent is a compound having structure (a).

3. The pigmented ink jet ink composition of claim 2, wherein R₃ and R₄ are independently selected from H and CₙH₂ₙ₊₁, where n = 1-4.

4. The pigmented ink jet ink composition of claim 2, wherein the anti-curl agent is 2,2-dimethyl-1,3-propanediol.

5. The pigmented ink jet ink composition of claim 2, wherein R₃ is NXZ, wherein X is selected from H, CH₃, C₂H₅ and C₂H₄OH.

6. The pigmented ink jet ink composition of claim 2, wherein the total number of CH₂CHYO units = 2-50.

7. The pigmented ink jet ink composition of claim 2, wherein the anti-curl agent is 3-methyl-1,3,5-pentanetriol.

8. The pigmented ink jet ink composition of claim 1, wherein the anti-curl agent is a compound having structure (b).

9. The pigmented ink jet ink composition of claim 8, wherein the anti-curl agent is α-D-glucose.

10. The pigmented ink jet ink composition of claim 1, wherein the anti-curl agent is a compound having structure (c).

11. The pigmented ink jet ink composition of claim 10, wherein the anti-curl agent is an oxyalkylene derivative of methyl α-D-glucoside.

12. The pigmented ink jet ink composition of claim 1, wherein the anti-curl agent is a compound having structure (d).

13. The pigmented ink jet ink composition of claim 12, wherein the anti-curl agent is selected from triethylene glycol, tetraethylene glycol and polyethylene glycol having a molecular weight in the range of 200-400.

14. The pigmented ink jet ink composition of claim 1, wherein the anti-curl agent is a compound having structure (e).

15. The pigmented ink jet ink composition of claim 14, wherein the anti-curl agent is a polyoxyethylene derivative of ethylenediamine.

16. The pigmented ink jet ink composition of claim 1, wherein said polymeric dispersant comprises a block copolymer and wherein the ink composition comprises 0.1 to 8 % pigment, 0.1 to 8 % block copolymer, and 84 to 99.8 % aqueous carrier medium taken together with the weight of the anti-curl agent, based upon the total weight of the ink composition.

17. The pigmented ink jet ink composition of claim 1, wherein the anti-curl agent is present in the amount of 10-75 a by weight, based on the total weight of ink.

18. The pigmented ink jet ink composition of claim 1, which has a surface tension of 0.18 to 0.70 mN/cm (18 to 70 dyne/cm) and a viscosity of no greater than 20 mPa·s (cP) at 20 °C.

19. The pigmented ink jet ink composition of claim 1, further comprising a surfactant.

20. A process for reducing paper curl in plain-paper printed elements, consisting essentially of the step of applying a pigmented ink jet ink composition to a plain-paper substrate with an ink jet printer, wherein said pigmented irk jet ink composition comprises an aqueous carrier medium, a colorant and at least one anti-curl agent as defined in claims 1 to 19.

## Patentansprüche

1. Wäßrige pigmentierte Tintenstrahlflüssigkeits-Zusammensetzung, umfassend:
(1) ein wäßriges Trägermedium;
(2) ein Farbmittel, bei dem es sich um eine Pigmentdispersion handelt, die ein Pigment und ein polymeres Dispersionsmittel umfaßt, und
(3) mindestens ein Antikräuselmittel in einer Menge von mindestens 10 Gew.-%, bezogen auf das Gesamtgewicht der pigmentierten Tintenstrahlflüssigkeits-Zusammensetzung, wobei das Antikräuselmittel eine Löslichkeit in Wasser von mindestens 4,5 % bei 25°C aufweist und ausgewählt ist aus:
(a) 1,3-Diolen, 1,3,5-Triolen, Amino-1,3-diolen und deren Polyoxyalkylenderivaten mit der folgenden Struktur: 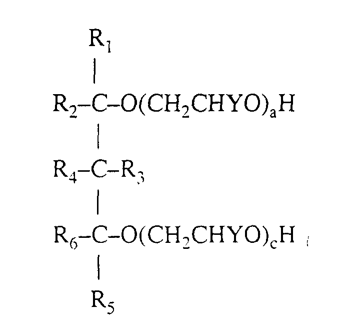 wobei
R₁, R₂, R₄, R₅ und R₆ unabhängig voneinander für H, CₙH₂ₙ₊₁, worin n = 1 bis 4, oder CₙH₂ₙO(CH₂CHYO)_{b}H, worin n = 1 - 6 und b = 0 bis 25, stehen;
R₃ = H, CₙH₂ₙ₊₁, worin n = 1 - 4; CₙH₂ₙO(CH₂CHYO)_{b}H, worin n = 1 bis 6 und b = 0 - 25; oder (CH₂)ₑNXZ, worin X und Z unabhängig voneinander H, CH₃, C₂H₅ oder C₂H₄O(CH₂CHYO)_{d}H, worin d = 0 bis 25 und e = 0 - 3, sind;
Y = H oder CH₃;
a und c unabhängig voneinander 0 - 25 sind und
wobei die Gesamtzahl der CH₂CHYO-Einheiten 0 - 100 beträgt; mit der Maßgabe, daß, wenn die Verbindung durch die Formel 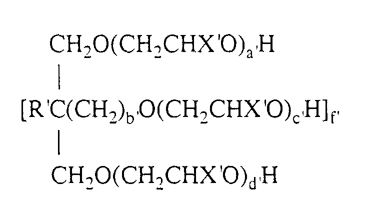 dargestellt wird, wobei
X' = -H oder -CH₃;
R' = -H, -CH₃, -C₂H₅, -C₃H₇, -C₄H₉ oder -CH₂O(CH₂ CH₂O)_{e'}H;
b' = 0 oder 1;
a' + d' + f'(c' *+* e') = 2 - 100 und
f' = 1 - 6,
sie nicht in einer Menge von 70 Gew.-% oder darunter der pigmentierten Tintenstrahlflüssigkeits-Zusammensetzung vorliegt;
(b) Verbindungen mit der folgenden Struktur: 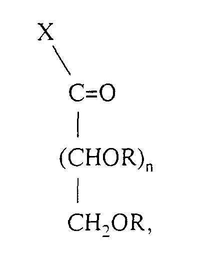 wobei
X = H, OH, CH₂O(CH₂CHYO)ₐH, O(CH₂CHYO)_{b}H oder OM, worin M ein Metallkation ist;
n=2-7;
R = (CH₂CHYO)_{c}, worin Y = H oder CH₃;
a, b und c unabhängig voneinander 0 - 25 sind und
wobei die Gesamtzahl der CH₂CHYO-Einheiten 0 - 125 beträgt;
(c) Pyranosiden und deren Polyalkoxyalkylen-Derivaten mit der folgenden Struktur: 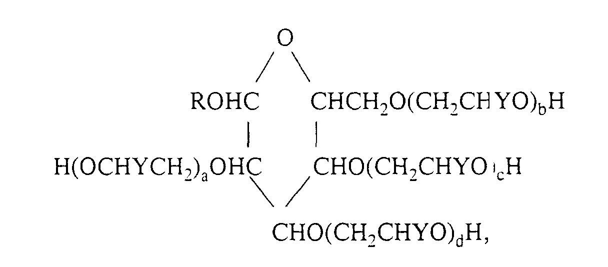 wobei
R = H oder CₙH₂₊₁, worin n = 0 - 4;
a, b, c und d unabhängig voneinander 0 - 30 sind;
Y = H oder CH₃ und
wobei die Gesamtzahl der CH₂CHYO-Einheiten 0 - 120 beträgt;
(d) Poly(oxyalkylen)-Verbindungen mit der folgenden Struktur:
H-(OCH₂CHY)ₓOH,
wobei
Y = H oder CH₃ und
x = 3 - 20; und
(e) Polyoxyalkylen-Derivate von aliphatischen Polyaminen mit der Struktur:
Z₁Z₂N(CH₂CH₂NZ₃)ₙZ₄,
wobei
Z₁, Z₂, Z₃ oder Z₄ unabhängig voneinander (CH₂CHYO)ₐH sind, wobei Y = H oder CH₃;
n = 1 - 20;
a unabhängig 0 - 20 ist und
wobei die Gesamtzahl der CH₂CHYO-Einheiten 3 - 200 ist.
2. Pigmentierte Tintenstrahlflüssigkeits-Zusammensetzung nach Anspruch 1, wobei das Antikräuselmittel aus einer Verbindung mit der Struktur (a) besteht.
3. Pigmentierte Tintenstrahlflüssigkeits-Zusammensetzung nach Anspruch 2, wobei R₃ und R₄ unabhängig voneinander ausgewählt werden aus H und CₙH₂ₙ₊₁, wobei n = 1 - 4.
4. Pigmentierte Tintenstrahlflüssigkeits-Zusammensetzung nach Anspruch 2, wobei das Antikräuselmittel 2,2-Dimethyl-1,3-propandiol ist.
5. Pigmentierte Tintenstrahlflüssigkeits-Zusammensetzung nach Anspruch 2, wobei R₃ für NXZ steht, worin X ausgewählt ist aus H, CH₃, C₂H₅ und C₂H₄OH.
6. Pigmentierte Tintenstrahlflüssigkeits-Zusammensetzung nach Anspruch 2, wobei die Gesamtzahl der CH₂CHYO-Einheiten = 2 - 50.
7. Pigmentierte Tintenstrahlflüssigkeits-Zusammensetzung nach Anspruch 2, wobei das Antikräuselmittel 3-Methyl-1,3-5-pentantriol ist.
8. Pigmentierte Tintenstrahlflüssigkeits-Zusammensetzung nach Anspruch 1, wobei das Antikräuselmittel eine Verbindung der Struktur (b) ist.
9. Pigmentierte Tintenstrahlflüssigkeits-Zusammensetzung nach Anspruch 8, wobei das Antikräuselmittel α-D-Glucose ist.
10. Pigmentierte Tintenstrahlflüssigkeits-Zusammensetzung nach Anspruch 1, wobei das Antikräuselmittel eine Verbindung der Struktur (c) ist.
11. Pigmentierte Tintenstrahlflüssigkeits-Zusammensetzung nach Anspruch 10, wobei das Antikräuselmittel ein Oxyalkylenderivat von Methyl-α-D-Glucosid ist.
12. Pigmentierte Tintenstrahlflüssigkeits-Zusammensetzung nach Anspruch 1, wobei das Antikräuselmittel eine Verbindung der Struktur (d) ist.
13. Pigmentierte Tintenstrahlflüssigkeits-Zusammensetzung nach Anspruch 12, wobei das Antikräuselmittel ausgewählt ist aus Triethylenglycol, Tetraethylenglycol und Polyethylenglycol mit einem Molekulargewicht im Bereich von 200 - 400.
14. Pigmentierte Tintenstrahlflüssigkeits-Zusammensetzung nach Anspruch 1, wobei das Antikräuselmittel aus einer Verbindung mit der Struktur (e) besteht.
15. Pigmentierte Tintenstrahlflüssigkeits-Zusammensetzung nach Anspruch 14, wobei das Antikräuselmittel ein Polyoxyethylenderivat von Ethylendiamin ist.
16. Pigmentierte Tintenstrahlflüssigkeits-Zusammensetzung nach Anspruch 1, wobei das polymere Dispersionsmittel ein Block-Copolymer umfaßt und wobei die Tintenzusammensetzung 0,1 bis 8 % Pigment, 0,1 bis 8 % Block-Copolymer und 84 bis 99,8 % wäßriges Trägermedium, zusammen mit dem Gewicht des Antikräuselmittels, umfaßt, bezogen auf das Gesamtgewicht der Tintenzusammensetzung.
17. Pigmentierte Tintenstrahlflüssigkeits-Zusammensetzung nach Anspruch 1, wobei das Antikräuselmittel in einer Menge von 10 - 75 Gew.-% vorhanden ist, bezogen auf das Gesamtgewicht der Flüssigkeit.
18. Pigmentierte Tintenstrahlflüssigkeits-Zusammensetzung nach Anspruch 1, die eine Oberflächenspannung von 0,18 bis 0,70 mN/cm (18 bis 70 dyn/cm) und eine Viskosität von nicht mehr als 20 mPa·s (cP) bei 20°C aufweist.
19. Pigmentierte Tintenstrahlflüssigkeits-Zusammensetzung nach Anspruch 1, die außerdem ein Tensid umfaßt.
20. Verfahren zum Reduzieren der Papierkräuselung in bedruckten Normalpapierelementen, das im wesentlichen aus dem Schritt des Auftragens einer pigmentierten Tintenstrahlflüssigkeits-Zusammensetzung auf ein Normalpapiersubstrat mit einem Tintenstrahldrucker besteht, wobei die pigmentierte Tintenstrahlflüssigkeits-Zusammensetzung ein wäßriges Trägermedium, ein Farbmittel und mindestens ein Antikräuselmittel umfaßt, wie in den Ansprüchen 1 bis 19 definiert.

## Revendications

1. Composition aqueuse pigmentée d'encre pour jet d'encre comprenant :
(1) un milieu support aqueux,
(2) un colorant étant une dispersion de pigment comprenant un pigment et un dispersant polymère et
(3) au moins un agent contre l'enroulement du papier en une quantité d'au moins 10% en poids sur base du poids total de la composition pigmentée d'encre pour jet d'encre, dans laquelle l'agent contre l'enroulement du papier présente une solubilité dans l'eau d'au moins 4,5% à 25°C et est choisi parmi
(a) des 1,3-diols, des 1,3,5-triols, des amino-1,3-diols et des dérivés polyoxyalkylène de ceux-ci présentant la structure suivante : 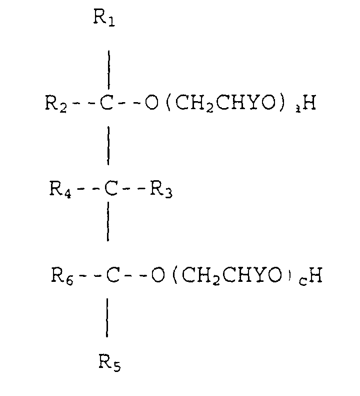 dans laquelle
R₁, R₂, R₄, R₅ et R₆ sont, indépendamment, H ; CₙH₂ₙ₊₁ où n= 1 à 4 ; ou CₙH₂ₙO(CH₂CHYO)_{b}H où n = 1 à 6 et b = 0 à 25 ;
R₃ = H ; CₙH₂ₙ₊₁ où n= 1 à 4 ; ou CₙH₂ₙO(CH₂CHYO)_{b}H où n = 1 à 6 et b = 0 à 25 ; ou (CH₂)ₑNXZ où X et Z sont indépendamment H ; CH₃ ; C₂H₅ ; ou C₂H₄O(CH₂CHYO)_{d}H, où d = 0 à 25 et e = 0 à 3 ;
Y = H ou CH₃ ;
a et c sont indépendamment 0 à 25 ; et dans laquelle le nombre total d'unités CH₂CHYO est de 0 à 100,
sous réserve que si ledit composé est représenté par la formule 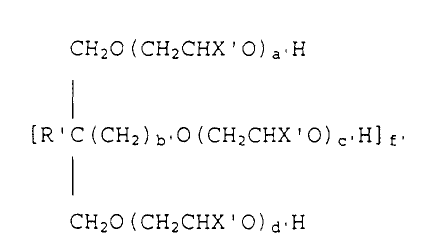 dans laquelle X' = -H ou -CH₃
R' = -H, -CH₃, -C₂H₅, -C₃H₇, -C₄H₉ ou -CH₂O(CH₂CH₂O)ₑH ;
b' = 0 ou 1 ;
a' + d' + f'(c'+e') = 2 à 100 ; et
f' = 1 à 6,
il ne soit pas présent en une quantité de 70% en poids ou moins de la composition pigmentée d'encre pour jet d'encre
(b) des composés présentant la structure suivante : 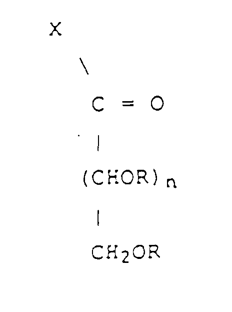 dans laquelle
X = H ; OH ; CH₂O(CH₂CHYO)ₐH ; O(CH₂CHYO)_{b}H ; ou OM, où M est un cation métallique ;
n = 2 à 7;
R = (CH₂CHYO)_{c}, où Y = H ou CH₃ ;
a, b et c sont indépendamment 0 à 25 ; et
dans laquelle le nombre total d'unités CH₂CHYO est de 0 à 125 ;
(c) des pyrannosides et ces dérivés polyoxyalkylène de ceux-ci présentant la structure suivante : 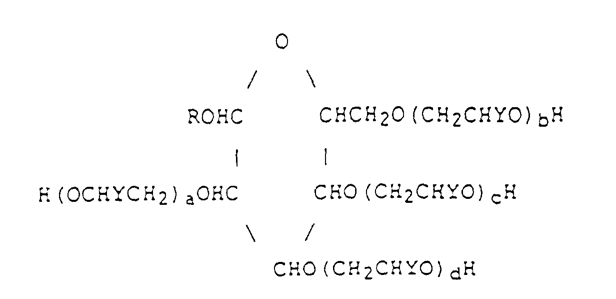 dans laquelle
R = H ou CₙH₂₊₁, où n = 0 à 4 ;
a, b, c et d représentent indépendamment 0 à 30 ;
Y = H ou CH₃ ; et
dans laquelle le nombre total d'unités CH₂CHYO est de 0 à 120 ;
(d) des composés poly(oxyalkylène) présentant la structure suivante
H- (OCH₂CHY) ₓOH
dans laquelle
Y = H ou CH₃ et
x = 3 à 20
et
(e) des dérivés polyoxyalkylène de polyamines aliphatiques présentant la structure
Z₁Z₂N (CH₂CH₂NZ₃)ₙZ₄
dans
laquelle Z₁, Z₂, Z₃ ou Z₄ sont indépendamment (CH₂CHYO)ₐH
où Y = H ou CH₃ ;
n = 1 à 20 ;
a est indépendamment 0 à 20 ; et
dans laquelle le nombre total d'unités CH₂CHYO est de 3 à 200.

2. Composition pigmentée d'encre pour jet d'encre de la revendication 1, dans laquelle l'agent contre l'enroulement du papier est un composé présentant la structure (a).

3. Composition pigmentée d'encre pour jet d'encre de la revendication 2, dans laquelle R₃ et R₄ sont indépendamment choisis parmi H et CₙH₂ₙ₊₁, où n = 1 à 4.

4. Composition pigmentée d'encre pour jet d'encre de la revendication 2, dans laquelle l'agent contre l'enroulement du papier est du 2,2-diméthyl-1,3-propanediol.

5. Composition pigmentée d'encre pour jet d'encre de la revendication 2, dans laquelle R₃ est NXZ, dans laquelle X est choisi parmi H, CH₃, C₂H₅ et C₂H₄OH.

6. Composition pigmentée d'encre pour jet d'encre de la revendication 2, dans laquelle le nombre total d'unités CH₂CHYO = 2 à 50.

7. Composition pigmentée d'encre pour jet d'encre de la revendication 2, dans laquelle l'agent contre l'enroulement du papier est du 3-méthyl-1,3,5-pentanetriol.

8. Composition pigmentée d'encre pour jet d'encre de la revendication 1, dans laquelle l'agent contre l'enroulement du papier est un composé présentant la structure (b).

9. Composition pigmentée d'encre pour jet d'encre de la revendication 8, dans laquelle l'agent contre l'enroulement du papier est du α-D-glucose.

10. Composition pigmentée d'encre pour jet d'encre de la revendication 1 dans laquelle l'agent contre l'enroulement du papier est un composé présentant la structure (c) .

11. Composition pigmentée d'encre pour jet d'encre de la revendication 10, dans laquelle l'agent contre l'enroulement du papier est un dérivé oxyalkylène de méthyl-α-D-glucoside.

12. Composition pigmentée d'encre pour jet d'encre de la revendication 1 dans laquelle l'agent contre l'enroulement du papier est un composé présentant la structure (d).

13. Composition pigmentée d'encre pour jet d'encre de la revendication 12, dans laquelle l'agent contre l'enroulement du papier est choisi parmi du triéthylèneglycol, du tétraéthylèneglycol et du polyéthylèneglycol présentant un poids moléculaire dans la plage de 200 à 400.

14. Composition pigmentée d'encre pour jet d'encre de la revendication 1 dans laquelle l'agent contre l'enroulement du papier est un composé présentant la structure (e).

15. Composition pigmentée d'encre pour jet d'encre de la revendication 14, dans laquelle l'agent contre l'enroulement du papier est un dérivé polyoxyéthylène de l'éthylènediamine.

16. Composition pigmentée d'encre pour jet d'encre de la revendication 1 dans laquelle ledit dispersant polymère comprend un copolymère à blocs et dans laquelle la composition d'encre comprend 0,1 à 8% de pigment, 0,1 à 8% de copolymère à blocs et 84 à 99,8% de milieu support aqueux pris ensemble avec le poids de l'agent contre l'enroulement du papier, basé sur le poids total de la composition d'encre.

17. Composition pigmentée d'encre pour jet d'encre de la revendication 1 dans laquelle l'agent contre l'enroulement du papier est présent en une quantité de 10 à 75% en poids basé sur le poids total d'encre.

18. Composition pigmentée d'encre pour jet d'encre de la revendication 1 qui présente une tension superficielle de 0,18 à 0,70 mN/cm (18 à 70 dynes/cm) et une viscosité qui n'est pas supérieure à 20 mPa.s (cP) à 20°C.

19. Composition pigmentée d'encre pour jet d'encre de la revendication 1 comprenant en outre un agent tensioactif.

20. Procédé pour réduire l'enroulement du papier dans des éléments imprimés sur papier brut, essentiellement constitué par l'étape d'application de la composition pigmentée d'encre pour jet d'encre sur un substrat en papier brut avec une imprimante à jet d'encre, dans lequel ladite composition pigmentée d'encre pour jet d'encre comprend un milieu support aqueux, un colorant et au moins un agent contre l'enroulement du papier, tel que défini dans les revendications 1 à 19.
